# EUROPEAN PATENT APPLICATION

(11) **EP 2 068 130 A2**
(43) Date of publication of application: **10.06.2009**
(21) Application number: 08253666.5
(22) Date of filing: 08.11.2008
(51) Int. Cl.: G01F 13/00

(54) **Method and device for indicating future need for product replacement of random use dispensing**

(30) Priority: 14.11.2007 US 985205
(71) Applicant: Joseph S.Kanfer, Ohio 44286 (US)
(72) Inventor: Wegelin, Jackson W., Stow, Ohio 44224 (US)
(74) Representative: Makovski, Priscilla Mary

(57) **Abstract**

A method indicates whether a dispensable product will require refilling prior to the next scheduled service interval. The method includes tracking the amount of use over a first interval, calculating a frequency based from the use over the first interval; comparing the quantity remaining with the required amount, which is the product of the number of weeks in the service interval and the calculated frequency. Based on the usage, when the quantity remaining is less than the required amount, a warning will be provided to indicate that the dispensing product should be replaced, as it will be empty before the next service interval. A dispenser (10) incorporating such method is also described.

## Description

### TECHNICAL FIELD

The invention relates to the field of dispensing indication systems. More particularly, the invention relates to methods and devices for inventory control and efficient route planning for the supply and maintenance of dispensers. More specifically, the invention relates to monitoring devices and methods for indicating whether product in a dispenser will require replacement prior to the next scheduled service.

### BACKGROUND

Many businesses employ service providers to supply and maintain dispensing systems including paper towel, toilet paper, and soap dispensers. The service provider must ensure that the dispenser does not empty prior to the next scheduled maintenance, while avoiding unnecessary replacement of product that increases cost in both service time and the product itself. Therefore, there is a need to predict the depletion of product several weeks in advance, and provide indication of the same to the service provider.

Dispenser indicators for low product are widely known in the art. However, known dispensers provide indication by fixed recordings of information. In other words, a dispenser will incorporate a counter or sensor that triggers a warning based from a constant value. One disadvantage of these prior art devices is that they may trigger a warning only after complete consumption of the product. Another disadvantage inherent to these prior art devices is the inability to predict whether the dispenser requires replacement resulting from the dispenser's varying usage.

Improvements have been made in the art to incorporate more parameters in determining when product should be refilled. One example is U.S. Patent No. 4,830,791 to Muderlak et al., which teaches an odor control device in the nature of an olfactory unit that can power up with the detection of a user or can be controlled by a fan timer circuit. The fan timer circuit allows the operation of dispensing for a predetermined span of time. The dispenser has a timer circuit that produces a pulse every fifteen minutes, and a counter that monitors these pulses. Once the pulse reaches a predetermined number, an indicator light flashes to represent that the cartridge may potentially be empty. However, Muderlak et al. does not compensate for the random use that is characteristic of a large portion of product dispensers.

Another example is U.S. Patent No. 5,772,074 belonging to Dial et al. Dial et al. teaches an approach to calculate the dispensing of a predetermined amount of a material. The '074 patent teaches a method wherein a dispensing score representative of the time of operation of a dispenser multiplied by a factor representative of the frequency or intensity of dispensing is calculated and the calculated dispensing score is compared with a predetermined total score. The patent teaches an alarm when the dispensing score is greater than the predetermined total score. The '074 patent does not indicate when the dispenser is almost out of fluid, but triggers a warning when it is believed that complete consumption has occurred. In addition, the frequency is not determined from random use, but is controlled by a preset frequency. Therefore, there is a need to predict and provide warning of the future emptying of a random use product dispenser.

### SUMMARY OF THE INVENTION

In light of the foregoing, it is a first aspect of the present invention to provide a method and device for indicating future need for product replacement for random use dispensing;

It is another aspect of the present invention to provide a method and device for indicating future need for product replacement that is adaptable to receive differing amounts of dispensing material;

Yet another aspect of the present invention is to provide a device adaptable to a variety of different product refills that determines the need of product replacement based on product quantity, next scheduled service, and random usage (to prevent complete emptying of product prior to next scheduled service).

Yet another aspect of the present invention is to provide a device with an adjustable service interval input that determines the need of product replacement based on product quantity, next scheduled service, and random usage (to prevent complete emptying of product).

### BRIEF DESCRIPTION OF THE DRAWINGS

These and other features and advantages of the present invention will become better understood with regard to the following description, appended claims, and accompanying drawings wherein:
Fig. 1 is a schematic of a dispenser in accordance with the concepts of the present invention;
Fig. 2 is a detailed schematic of the dispenser showing a controller, RFID tag reader, a potentiometer, and an LED according to the present invention; and
Fig. 3 is a flowchart of the operational steps for triggering the indicator of the present invention.

### BEST MODE FOR CARRYING OUT THE INVENTION

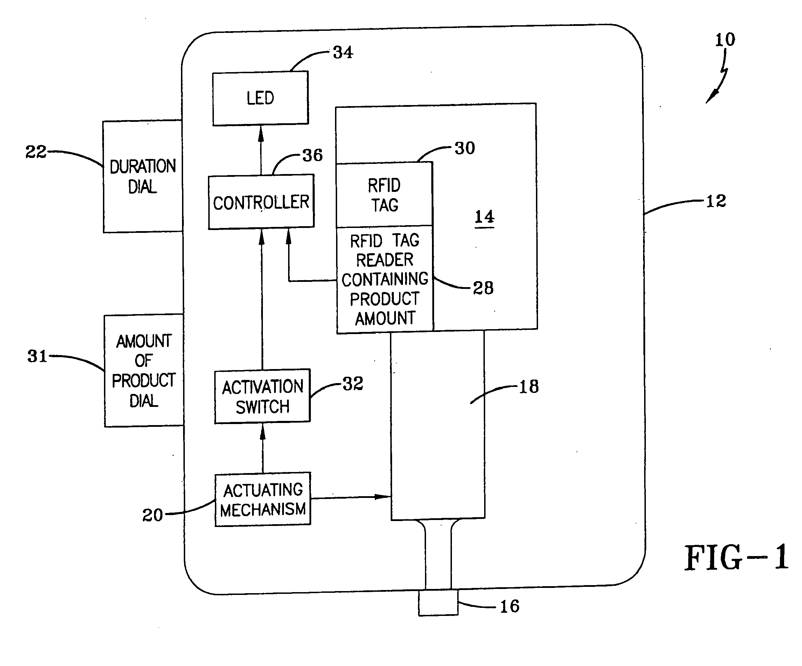

Referring now to the drawings and more particularly to Fig.1, it can be seen that a dispenser made in accordance with the invention is designated generally by the numeral 10. The dispenser includes a dispenser housing structure of widely known dispensers, designated generally by the numeral 12. The dispenser housing 12 may be a wall or counter-mount unit, or can be a freestanding unit disposed on a counter top or the like. The dispenser described herein is used for dispensing fluids such as soaps and other liquids, but it will be appreciated that other products could be dispensed such as paper, tablets, or any flowable material. In any event, the dispenser housing 12 typically includes a cartridge of liquid product 14 positioned above and in communication with a dispensing nozzle 16, with an appropriate pump or other dispensing mechanism 18 interposed therebetween. As is well known by those skilled in the art, the dispensing mechanism 18 is configured to dispense a preset amount of liquid upon each dispensing cycle. In accordance with the invention, the dispensing mechanism 18 is controlled by an actuating mechanism 20 such as a motor, solenoid, plunger or the like. The mechanism 20 is energized upon the detection of an object, such as a user's hands, positioned beneath the dispensing nozzle 16. However, the mechanism 20 is not limited to a hands-free device and can employ any means of actuation readily known in the art.

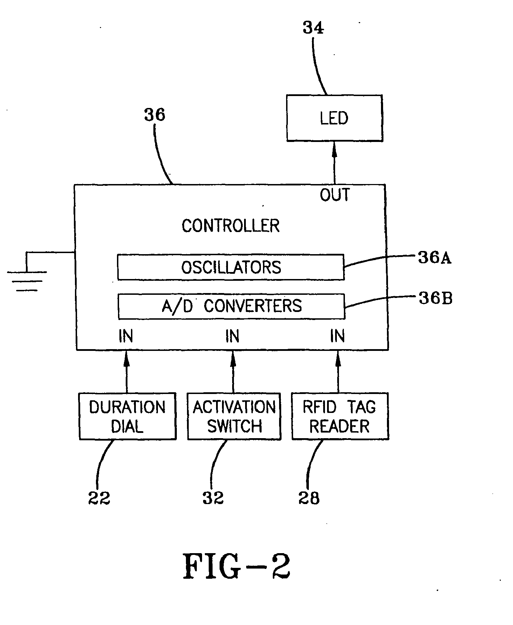

Referring now to Fig. 2, it can be seen that an indication circuit, designated generally by the numeral 21, includes a duration dial 22, which allows an end user to select a service interval representative of the total amount of time before the next scheduled service. The duration dial 22 consists of a potentiometer 24 and knob 26 representative of the amount of time associated with potentiometer 24. In the preferred embodiment, the service interval is based on a selected number of weeks; however it should be readily apparent that the service interval may represent any time interval. In another embodiment, the service interval may be preprogrammed to an arbitrary value such as four weeks.

The indication circuit 21 also includes a radio frequency identification ("RFID") tag reader 28 that communicates with an RFID tag 30 included on the refill cartridge 14. The RFID tag 30 includes an activation count, which will be further described below. In the alternative, the activation count can be established by a variety of methods including bar code technology, a resistor representative of the count positioned on the refill cartridge, or by an amount of product dial (potentiometer 31) that allows for manual entry by a service provider. Similar to the service interval control, the activation count may also be preprogrammed to an arbitrary value representative to the size of the refill.

The indication circuit 21 includes an activation switch 32 associated with actuating mechanism 20. The indication circuit 21 provides an indication in the form of a light-emitting diode (LED) 34 that flashes (illuminates) when the cartridge of the dispenser is in need of replacement prior to the next service interval. The indication is generated prior to complete depletion of the product, and only when usage suggests the product will need refilled prior to the next service interval. The LED 34 can be replaced with any warning such as a buzzer, bulb, or any other device that would provide apparent indication to the service provider that the dispenser is in need of a replacement refill. It should also be noted that the LED 34 does not have to be positioned on dispenser 10 and can be located remotely.

The indication circuit 21 also includes a controller 36, which receives data from duration dial 22, the RFID tag reader 28, and the activation switch 32. Controller 36 provides the necessary hardware, software, and memory to implement the functions of the control circuit and properly operate the dispenser 10. In the preferred embodiment, the controller 36 can read up to six different voltage settings provided by the potentiometer 24 for the service interval, and can adjust the initial activation count provided by the RFID tag reader 28. The controller 36 processes the information provided from the above stated inputs and determines whether to supply voltage to the LED 34. In the preferred embodiment, the controller will produce a signal to blink the LED 34 once every two seconds.

As shown in Fig 2, the controller 36 could be a microcontroller such as manufactured by Zilog. Of course, controllers manufactured by others could be used. The controller 36 may also include, among other components, multiple oscillators 36A and an analog to digital converter 36B. Generally, one of the multiple oscillators 36A could be an internal oscillator, which, if properly enabled, may run continuously. Other oscillators may be used for other functions. Skilled artisans will appreciate that the controller 36 will operate in low power modes when waiting for the activation switch to be activated, and when not performing calculations. Skilled artisans will also appreciate that accurate timekeeping can be kept by using an external watch crystal, or by calibrating the controller's internal oscillator(s) 36A to an external watch crystal. According to one embodiment, the converter 36B is utilized by the controller to receive analog voltage signals generated by the duration dial 22. The converter 36B may be in the form of a comparator or an analog to digital converter. The controller stores weekly usage and activation count to a non-volatile storage once per day to prevent loss of data during battery replacement. Contemporaneously, the controller averages the daily counts into the weekly average. After servicing the dispenser, the activation count may be reset to an initial value through a number of ways including a manual reset switch, a unique serial number on the RFID tag, or the like.

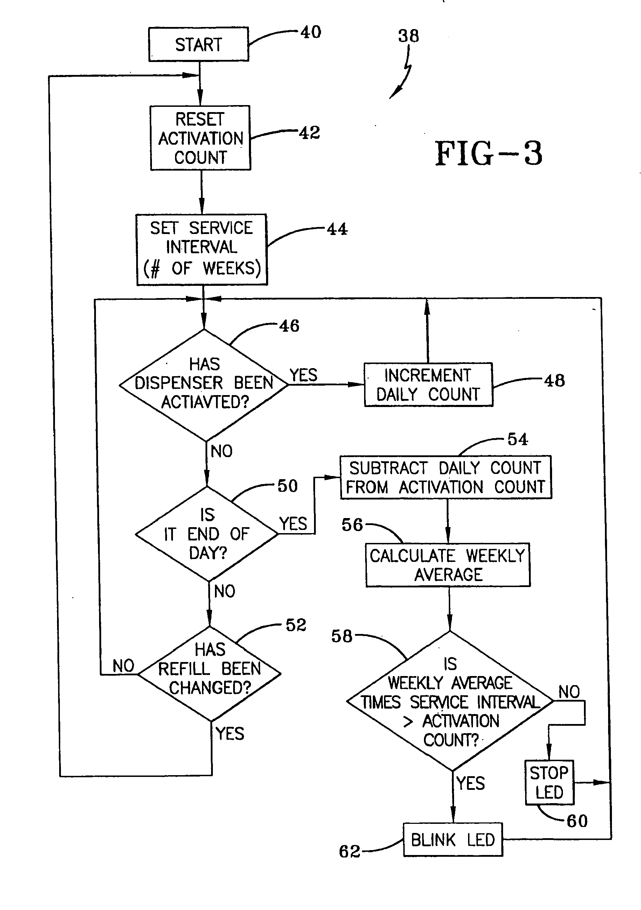

The operational process performed by the controller for indication is designated by the numeral 38 as shown in Fig. 3. The process 38 has a start sequence at step 40. At step 42, the controller stores an activation count which is provided by the RFID tag reader 28. The activation count represents the total number of dispenses remaining in the cartridge 14. At step 44, controller 36 stores the service interval in weeks, which is entered from the duration dial. At step 46, controller 36 monitors the activation switch 32 to determine whether the dispenser has been activated. When the controller 36 detects the dispenser has been activated, the controller 36 increments the daily count as shown in step 48, and then returns back to step 46. It should be noted that the daily count is initially set to zero, but remains in memory for a weekly average calculation, which will be further discussed below.

If the controller 36 does not receive a signal from the activation switch 32, the controller 36 proceeds to step 50 to determine whether it is the end of the day. When the controller 36 does not detect the end of the day, the controller 36 determines whether the refill has been changed at step 52. At step 52, the controller 36 either returns to step 42 when the controller 36 detects a signal indicating product replacement, or returns to step 46 if replacement has not yet occurred.

If the controller receives a signal indicating the end of the day at step 50, the controller 36 proceeds to step 54, and subtracts a daily count from the activation count. At step 56, the controller 36 calculates a weekly average by evaluating the current daily count with the daily counts of the past six days. The weekly average can be calculated even after cartridge replacement, because, as stated above, the daily count remains in memory after the service interval and activation count have been reset At step 58, the controller 36 compares the product of the weekly average and service interval to the activation count. If the product of the weekly average and service interval is less than the activation count, the controller 36 does not power light emitting diode 34 as shown in step. However, when product of the weekly average and service interval is greater than the activation count, the controller 36 sends a signal to flash the LED 34 to indicate that the dispensing material will be consumed prior to the next scheduled service as shown at step 62. After step 62, the controller 36 then returns to step 46.

Thus, it can be seen that the objects of the invention have been satisfied by the structure and its method for use presented above. While in accordance with the Patent Statutes, only the best mode and preferred embodiment has been presented and described in detail, it is to be understood that the invention is not limited thereto or thereby. Accordingly, for an appreciation of the true scope and breadth of the invention, reference should be made to the following claims.

## Claims

1. A method for indicating when to replace material in a dispenser:
setting an activation count to a number representative of the amount of dispenses remaining;
setting a service interval for the dispenser over a number of units of time;
decrementing said activation count upon each activation of the dispenser;
calculating a running average of material usage representative of one unit of time;
comparing said activation count with the product of said running average and said service interval; and
indicating the dispenser requires refilling when said product is greater than said activation count.

2. The method according to claim 1, wherein said units of time are weeks.

3. A dispenser for dispensing product, comprising:
an activation count setting means for setting an activation count;
a means for setting a service interval for allowing entry of a service interval representative of the number of units of time before next service;
a dispensing mechanism;
an indication means;
a controller; and
a switch associated with said dispensing mechanism that generates a voltage received by said controller that decrements an activation count associated with the number of dispenses of material, wherein said controller compares said activation count with the product of said service interval and average of material usage representative of one unit of time, said controller sending a signal to said indication means when said product is greater than said activation count

4. The dispenser of claim 3 said means for setting a service interval includes a selector comprising a potentiometer and a dial that comprises a label representative of the number of units of time before next service.

5. The dispenser of claim 3 wherein said activation count setting means comprises a potentiometer and a dial that comprises a label representative of the number of units of product before next service.

6. The dispenser of claim 3 further comprising:
a refill cartridge; and
said activation count setting means comprises an RFID tag positioned on said refill cartridge.

7. The dispenser of claim 3 wherein said units of time is weeks.

8. The dispenser of claim 3 wherein said number of units of time has six different settings.

9. The dispenser of claim 7, wherein the average usage and activation count is placed in a nonvolatile storage once per day.

10. The dispenser of claim 3 wherein said service interval is preprogrammed in said controller.

11. The dispenser of claim 3 further comprising:
a refill cartridge; and
said means for setting a service interval comprises an RFID tag positioned on said refill cartridge.

12. The dispenser of claim 3 wherein said activation count is preprogrammed into said controller.

13. The dispenser of claim 3 wherein said activation count is manually reset to an initial value when a refill is replaced.

14. The dispenser of claim 11 wherein said activation count is reset to an initial value when a unique serial number on said RFID is recognized.
